# EUROPEAN PATENT APPLICATION

(11) **EP 4 679 073 A1**
(43) Date of publication of application: **14.01.2026**
(21) Application number: 25182725.9
(22) Date of filing: 13.06.2025
(51) Int. Cl.: G01N 27/16, G01N 27/18

(54) **SENSOR**

(30) Priority: 08.07.2024 JP 2024109778
(71) Applicant: Kabushiki Kaisha Toshiba, Minato-ku Tokyo (JP)
(72) Inventor: AKIMOTO, Yosuke, Tokyo (JP); YAMAZAKI, Yui, Tokyo (JP); HAMASAKI, Hiroshi, Tokyo (JP)
(74) Representative: Marks & Clerk LLP

(57) **Abstract**

According to one embodiment, a sensor includes a base, first to fourth fixed portions fixed to the base, a first element portion including a first conductive member and a first other conductive member, a second element portion including a second conductive member, first to fourth connecting portions, and first and fourth other connecting portions. The first connecting portion and the second connecting portion are configured to pass a first current flowing through the first conductive member. The first connecting portion is configured to pass a first other current flowing through the first other conductive member. The first other connecting portion is configured to pass a second current flowing through the second conductive member.

## Description

### FIELD

Embodiments described herein relate generally to a sensor.

### BACKGROUND

For example, there is a sensor using a MEMS (Micro Electro Mechanical Systems) element, etc. It is desirable to improve the characteristics of the sensor.

### BRIEF DESCRIPTION OF THE DRAWINGS

FIG. 1 is a schematic plan view illustrating a sensor according to the first embodiment;
FIGS. 2A and 2B are schematic cross-sectional views illustrating the sensor according to the first embodiment;
FIGS. 3A, 3B, and 3C are schematic cross-sectional views illustrating the sensor according to the first embodiment;
FIG. 4 is a schematic plan view illustrating the sensor according to the first embodiment;
FIG. 5 is a schematic plan view illustrating the sensor according to the first embodiment;
FIGS. 6A, 6B, and 6C are schematic cross-sectional views illustrating a sensor according to the first embodiment;
FIGS. 7A and 7B are schematic plan views illustrating a sensor according to the first embodiment;
FIG. 8 is a schematic plan view illustrating a sensor according to a second embodiment; and
FIG. 9 is a schematic plan view illustrating a sensor according to a third embodiment.

### DETAILED DESCRIPTION

According to one embodiment, a sensor includes a base, a first fixed portion fixed to the base, a second fixed portion fixed to the base, a third fixed portion fixed to the base, a fourth fixed portion fixed to the base, a first element portion including a first conductive member and a first other conductive member, a second element portion including a second conductive member, a first connecting portion supported by the first fixed portion and supporting the first element portion, a second connecting portion supported by the second fixed portion and supporting the first element portion, a first other connecting portion supported by the first fixed portion and supporting the second element portion, a third connecting portion supported by the third fixed portion and supporting the second element portion a fourth connecting portion supported by the fourth fixed portion and supporting the first element portion, and a fourth other connecting portion supported by the fourth fixed portion and supporting the second element portion. The first connecting portion and the second connecting portion are configured to pass a first current flowing through the first conductive member. The first connecting portion is configured to pass a first other current flowing through the first other conductive member. The first other connecting portion is configured to pass a second current flowing through the second conductive member.

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously or illustrated in an antecedent drawing are marked with like reference numerals, and a detailed description is omitted as appropriate.

### (First Embodiment)

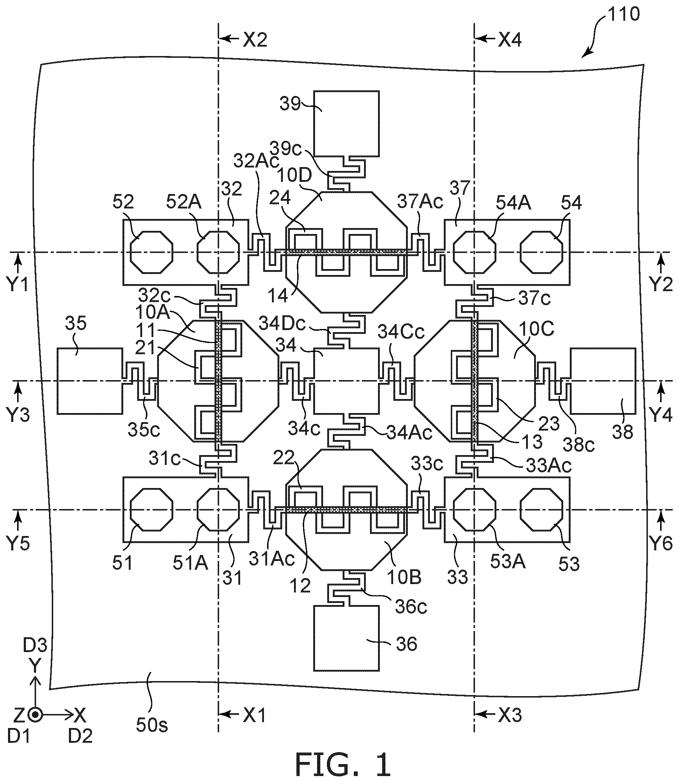

FIG. 1 is a schematic plan view illustrating a sensor according to the first embodiment.

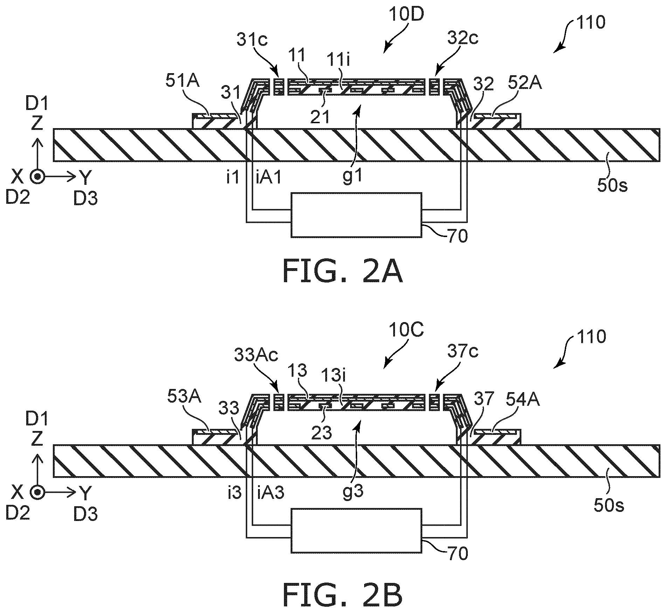

FIGS. 2A and 2B are schematic cross-sectional views illustrating the sensor according to the first embodiment.

FIG. 2A is a cross-sectional view taken along the line X1-X2 in FIG. 1. FIG. 2B is a cross-sectional view taken along the line X3-X4 in FIG. 1.

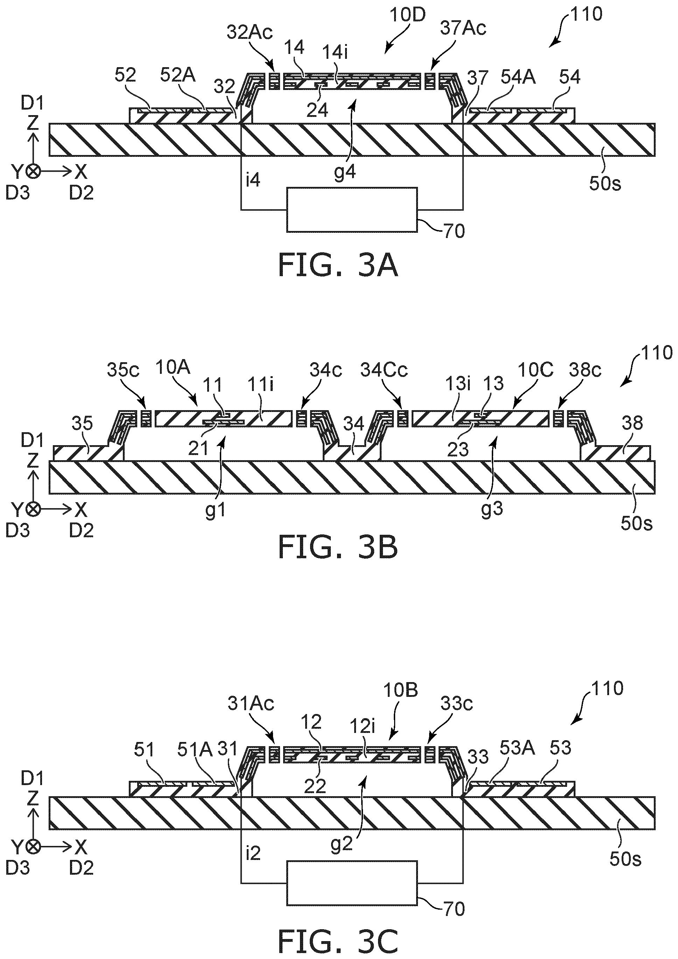

FIGS. 3A, 3B, and 3C are schematic cross-sectional views illustrating the sensor according to the first embodiment.

FIG. 3A is a cross-sectional view taken along the line Y1-Y2 in FIG. 1. FIG. 3B is a cross-sectional view taken along the line Y3-Y4 in FIG. 1. FIG. 3C is a cross-sectional view taken along the line Y5-Y6 in FIG. 1.

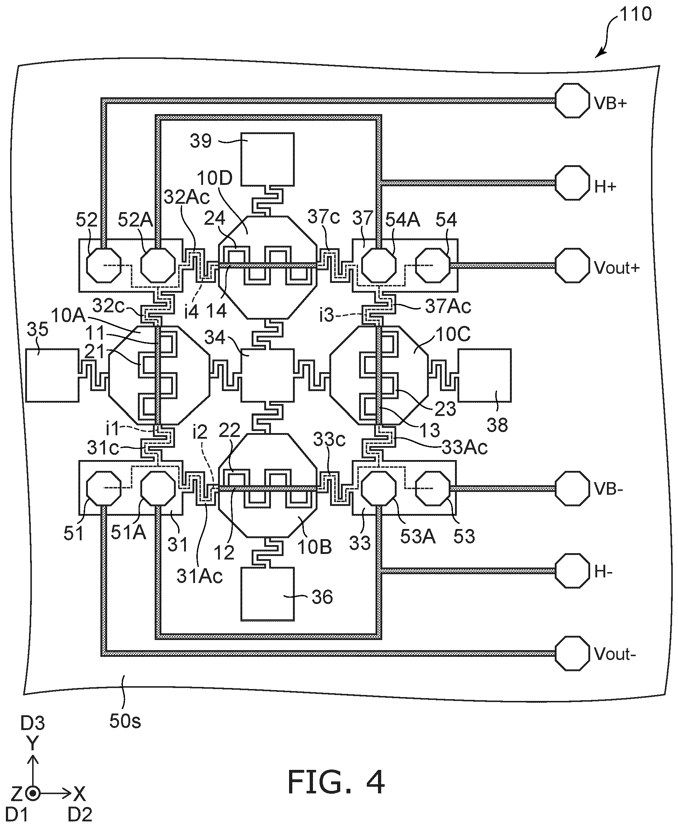

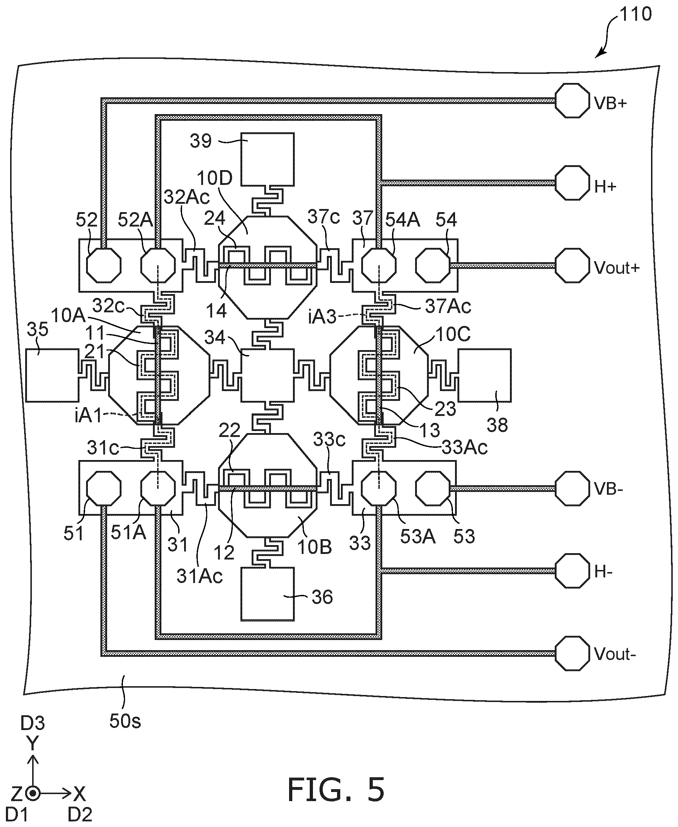

FIGS. 4 and 5 are schematic plan views illustrating the sensor according to the first embodiment.

As shown in FIGS 1, 2A, 2B, 3A, 3B and 3C, a sensor 110 according to the embodiment includes a base 50s, a first fixed portion 31, a second fixed portion 32, a third fixed portion 33, a fourth fixed portion 34, a first element portion 10A and a second element portion 10B. The sensor 110 further includes a first connecting portion 31c, a second connecting portion 32c, a first other connecting portion 31Ac, a third connecting portion 33c, a fourth connecting portion 34c and a fourth other connecting portion 34Ac.

The first fixed portion 31 is fixed to the base 50s. The second fixed portion 32 is fixed to the base 50s. The third fixed portion 33 is fixed to the base 50s. The fourth fixed portion 34 is fixed to the base 50s. The fifth fixed portion 35 is fixed to the base 50s. The sixth fixed portion 36 is fixed to the base 50s.

The first element portion 10A includes a first conductive member 11 and a first other conductive member 21. The second element portion 10B includes a second conductive member 12. The second element portion 10B may further include a second other conductive member 22.

The first connecting portion 31c is supported by the first fixed portion 31 and supports the first element portion 10A. The second connecting portion 32c is supported by the second fixed portion 32 and supports the first element portion 10A. The first other connecting portion 31Ac is supported by the first fixed portion 31 and supports the second element portion 10B. The third connecting portion 33c is supported by the third fixed portion 33 and supports the second element portion 10B. The fourth connecting portion 34c is supported by the fourth fixed portion 34 and supports the first element portion 10A. The fourth other connecting portion 34Ac is supported by the fourth fixed portion 34 and supports the second element portion 10B.

As shown in FIG. 2A, the first connecting portion 31c and the second connecting portion 32c are configured to pass a first current i1 flowing through the first conductive member 11. The first connecting portion 31c is configured to pass a first other current iA1 flowing through the first other conductive member 21. In this example, the second connecting portion 32c is configured to pass the first other current iA1.

As shown in FIG. 3C, the first other connecting portion 31Ac is configured to pass the second current i2 flowing through the second conductive member 12. In this example, the third connecting portion 33c is configured to pass the second current i2.

A controller 70 may be provided in the sensor 110. The controller 70 may be included in the sensor 110. The controller 70 may be provided separately from the sensor 110. The controller 70 is configured to supply the above currents. The controller 70 is configured to apply a voltage corresponding to the above currents.

For example, the controller 70 is configured to supply a first current i1 to the first conductive member 11. The controller 70 is configured to supply a first other current iA1 to the first other conductive member 21. The controller 70 is configured to supply a second current i2 to the second conductive member 12.

In the sensor 110, a state of a detection target around the first element portion 10A and the second element portion 10B is detected by a value corresponding to a difference between a first electrical resistance of the first conductive member 11 and a second electrical resistance of the second conductive member 12 when the first other current iA1 flows through the first other conductive member 21.

The detection target is, for example, a gas. For example, the first other current iA1 flows through the first other conductive member 21, causing the temperature of the first element portion 10A to rise. Thereby, the first electrical resistance R1 of the first conductive member 11 changes. The temperature of the first element portion 10A changes depending on the state of the detection target. This is thought to be due, for example, to changes in heat dissipation properties depending on the state of the detection target. On the other hand, the temperature of the second element portion 10B does not substantially change. For example, the second electrical resistance R2 of the second conductive member 12 is not substantially affected by the detection target.

For example, the first element portion 10A is a sensor element. The second element portion 10B is, for example, a reference element. By detecting the difference between the first electrical resistance R1 and the second electrical resistance R2, the state of the detection target can be detected with higher accuracy. The sensor 110 is, for example, a resistance change type sensor. The controller 70 may be configured to detect a signal (such as a voltage) obtained from the element portions. The controller 70 may be configured to detect a value (signal) corresponding to the electrical resistance.

In the embodiment, the first element portion 10A is supported by the first connecting portion 31c, the second connecting portion 32c, and the fourth connecting portion 34c. As described above, the first current i1 flowing through the first conductive member 11 flows through the first connecting portion 31c and the second connecting portion 32c. The first other current iA1 flowing through the first other conductive member 21 flows through the first connecting portion 31c and the second connecting portion 32c. The first element portion 10A is supported by the fourth connecting portion 34c in addition to the two connecting portions that form the current path. This allows the first element portion 10A to be supported more stably.

In the embodiment, the second element portion 10B is supported by the first other connecting portion 31Ac, the third connecting portion 33c, and the fourth other connecting portion 34Ac. As described above, the second current i2 flowing through the second conductive member 12 flows through the first other connecting portion 31Ac and the third connecting portion 33c. The second element portion 10B is supported by the fourth other connecting portion 34Ac in addition to the two connecting portions that form the current path. This allows the second element portion 10B to be supported more stably.

In the embodiment, the first element portion 10A and the second element portion 10B are stably supported. The characteristics of the first element portion 10A and the second element portion 10B are stable. The signals obtained from the first element portion 10A and the second element portion 10B are stable. Stable, highly accurate detection results are obtained. According to the embodiment, it is possible to provide a sensor whose characteristics can be improved.

The first current i1, the first other current iA1, and the second current i2 do not pass through the fourth connecting portion 34c and the fourth other connecting portion 34Ac.

As shown in FIG. 2A, a first gap g1 is provided between the base 50s and the first element portion 10A. As shown in FIG. 3C, a second gap g2 is provided between the base 50s and the second element portion 10B. The first element portion 10A and the second element portion 10B have a MEMS structure.

As shown in FIG. 2A, a first direction D1 from the base 50s to the first fixed portion 31 is defined as a Z-axis direction. One direction perpendicular to the Z-axis direction is defined as an X-axis direction. A direction perpendicular to the Z-axis and X-axis directions is defined as a Y-axis direction.

As shown in FIG. 1, the second direction D2 from the first fixed portion 31 to the third fixed portion 33 crosses the first direction D1. The second direction D2 may be, for example, the X-axis direction. A third direction D3 from the first fixed portion 31 to the second fixed portion 32 crosses a plane including the first direction D1 and the second direction D2. The third direction D3 is, for example, the Y-axis direction.

As shown in FIG. 1, the sensor 110 may further include a fifth fixed portion 35, a sixth fixed portion 36, a fifth connecting portion 35c, and a sixth connecting portion 36c. The fifth fixed portion 35 is fixed to the base 50s. The sixth fixed portion 36 is fixed to the base 50s. The fifth connecting portion 35c is supported by the fifth fixed portion 35 and supports the first element portion 10A. The sixth connecting portion 36c is supported by the sixth fixed portion 36 and supports the second element portion 10B.

In this example, a direction from the fifth fixed portion 35 to the fourth fixed portion 34 is along the second direction D2. A direction from the sixth fixed portion 36 to the fourth fixed portion 34 is along the third direction D3. For example, at least a part of the first element portion 10A is between the fifth fixed portion 35 and the fourth fixed portion 34 in the second direction D2. For example, at least a part of the second element portion 10B is between the sixth fixed portion 36 and the fourth fixed portion 34 in the third direction D3.

The first current i1, the first other current iA1, and the second current i2 do not pass through the fourth connecting portion 34c, the fourth other connecting portion 34Ac, the fifth connecting portion 35c, and the sixth connecting portion 36c.

The first element portion 10A is supported by two connecting portions through which current passes, and by two connecting portions through which current does not pass. By being supported by four connecting portions, the first element portion 10A is supported more stably. The second element portion 10B is supported by two connecting portions through which current passes, and by two connecting portions through which current does not pass. By being supported by four connecting portions, the second element portion 10B is supported more stably. The signals obtained from these support portions become more stable. The characteristics are further improved.

In the embodiment, the fourth fixed portion 34 supports the fourth connecting portion 34c and the fourth other connecting portion 34Ac. For example, the fourth fixed portion 34 is shared by the first element portion 10A and the second element portion 10B. This allows the size of the sensor 110 to be reduced. For example, a small "footprint" can be obtained. For example, the distance between the first element portion 10A and the second element portion 10B can be shortened. For example, the temperature difference between these elements can be reduced. The difference in characteristics can be reduced.

As shown in FIG. 1, the second element portion 10B may further include a second other conductive member 22. No current may be supplied to the second other conductive member 22.

As shown in FIG. 2A, the first element portion 10A may further include a first insulating member 11i. At least a part of the first insulating member 11i is provided between the first conductive member 11 and the first other conductive member 21. The first element portion 10A is, for example, membrane-shaped.

As shown in FIG. 3C, the second element portion 10B may further include a second insulating member 12i. At least a part of the second insulating member 12i is provided around the second conductive member 12. At least a part of the second insulating member 12i may be provided between the second conductive member 12 and the second other conductive member 22. The second element portion 10B is, for example, membrane-shaped.

As shown in FIG. 1, the sensor 110 may further include a first electrode 51, a first other electrode 51A, a second electrode 52, a second other electrode 52A, and a third electrode 53. As shown in FIG. 4, the first electrode 51 is connected to a part of the first conductive member 11 via the first connecting portion 31c. The first other electrode 51A is connected to a part of the first other conductive member 21 via the first connecting portion 31c. The second electrode 52 is connected to another part of the first conductive member 11 via the second connecting portion 32c. The second other electrode 52A is connected to another part of the first other conductive member 21 via the second connecting portion 32c.

For example, the third electrode 53 is connected to a part of the second conductive member 12 via the third connecting portion 33c. The first electrode 51 is connected to another part of the second conductive member 12 via the first other connecting portion 31Ac. The above-mentioned current is supplied via these electrodes. The sensor 110 may further include a third other electrode 53A. The third other electrode 53A may be used when supplying a current to the second other conductive member 22, for example.

As shown in FIG. 1, in this example, the sensor 110 further includes a seventh fixed portion 37, a third element portion 10C, a fourth element portion 10D, a third other connecting portion 33Ac, a seventh connecting portion 37c, a fourth opposing connecting portion 34Cc, a second other connecting portion 32Ac, a seventh other connecting portion 37Ac, and a fourth opposing other connecting portion 34Dc.

The seventh fixed portion 37 is fixed to the base 50s. The third element portion 10C includes a third conductive member 13 and a third other conductive member 23. The fourth element portion 10D includes a fourth conductive member 14. The fourth element portion 10D may further include a fourth other conductive member 24.

The third other connecting portion 33Ac is supported by the third fixed portion 33 and supports the third element portion 10C. The seventh connecting portion 37c is supported by the seventh fixed portion 37 and supports the third element portion 10C. The fourth opposing connecting portion 34Cc is supported by the fourth fixed portion 34 and supports the third element portion 10C.

The second other connecting portion 32Ac is supported by the second fixed portion 32 and supports the fourth element portion 10D. The seventh other connecting portion 37Ac is supported by the seventh fixed portion 37 and supports the fourth element portion 10D. The fourth opposing other connecting portion 34Dc is supported by the fourth fixed portion 34 and supports the fourth element portion 10D.

As shown in FIG. 2B, the third other connecting portion 33Ac and the seventh connecting portion 37c are configured to pass the third current i3 flowing through the third conductive member 13. The third other connecting portion 33Ac and the seventh connecting portion 37c are configured to pass the third other current iA3 flowing through the third other conductive member 23. As shown in FIG. 3A, the second other connecting portion 32Ac and the seventh other connecting portion 37Ac are configured to pass the fourth current i4 flowing through the fourth conductive member 14.

These currents may be supplied by the controller 70. Voltages corresponding to these currents may be supplied by the controller 70.

The third element portion 10C is supported by the fourth opposing connecting portion 34Cc in addition to the two connecting portions that form the current path. This allows the third element portion 10C to be supported more stably. The fourth element portion 10D is supported by the fourth opposing other connecting portion 34Dc in addition to the two connecting portions that form the current path. This allows the fourth element portion 10D to be supported more stably. The characteristics are further improved.

As shown in FIG. 1, the sensor 110 may further include an eighth fixed portion 38, a ninth fixed portion 39, an eighth connecting portion 38c, and a ninth connecting portion 39c. The eighth fixed portion 38 is fixed to the base 50s. The ninth fixed portion 39 is fixed to the base 50s. The eighth connecting portion 38c is supported by the eighth fixed portion 38 and supports the third element portion 10C. The ninth connecting portion 39c is supported by the ninth fixed portion 39 and supports the fourth element portion 10D.

The current flowing through the third element portion 10C does may not flow through the eighth connecting portion 38c. The third element portion 10C is further supported by the eighth connecting portion 38c, through which no current flows. The third element portion 10C becomes further more stable.

The current flowing through the fourth element portion 10D may not flow through the ninth connecting portion 39c. The fourth element portion 10D is further supported by the ninth connecting portion 39c, through which no current flows. The fourth element portion 10D becomes further more stable.

As shown in FIG. 1, in the second direction D2, the fourth fixed portion 34 is provided between the fifth fixed portion 35 and the eighth fixed portion 38. In the second direction D2, the first element portion 10A is provided between the fifth fixed portion 35 and the fourth fixed portion 34. In the second direction D2, the third element portion 10C is provided between the fourth fixed portion 34 and the eighth fixed portion 38. In the second direction D2, the second element portion 10B is provided between the first fixed portion 31 and the third fixed portion 33. In the second direction D2, the fourth element portion 10D is provided between the second fixed portion 32 and the seventh fixed portion 37.

As shown in FIG. 1, in the third direction D3, the fourth fixed portion 34 is provided between the sixth fixed portion 36 and the ninth fixed portion 39. In the third direction D3, the second element portion 10B is provided between the sixth fixed portion 36 and the fourth fixed portion 34. In the third direction D3, the fourth element portion 10D is provided between the fourth fixed portion 34 and the ninth fixed portion 39. In the third direction D3, the first element portion 10A is provided between the first fixed portion 31 and the second fixed portion 32. In the third direction D3, the third element portion 10C is provided between the third fixed portion 33 and the seventh fixed portion 37.

This configuration allows the four element portions to be efficiently arranged in a small footprint area.

As shown in FIG. 1, the sensor 110 may further include a third electrode 53, a third other electrode 53A, a fourth electrode 54, and a fourth other electrode 54A. The third electrode 53 is connected to a part of the third conductive member 13 via a third other connecting portion 33Ac. The third other electrode 53A is connected to a part of the third other conductive member 23 via a third other connecting portion 33Ac.

The fourth electrode 54 is connected to another part of the third conductive member 13 via the seventh connecting portion 37c. The fourth other electrode 54A is connected to another part of the third other conductive member 23 via the seventh connecting portion 37c. The above-mentioned currents are supplied via these electrodes.

For example, the state of the detection target around the third element portion 10C and the fourth element portion 10D is detected by a value corresponding to a difference between a third electrical resistance R3 of the third conductive member 13 and a fourth electrical resistance R4 of the fourth conductive member 14 when the third other current iA3 flows through the third other conductive member 23. For example, the third other current iA3 flows through the third other conductive member 23, causing the temperature of the third element portion 10C to rise. This causes the third electrical resistance R3 of the third conductive member 13 to change. The temperature of the third element portion 10C changes depending on the state of the detection target. This is thought to be due to, for example, changes in heat dissipation depending on the state of the detection target. On the other hand, for example, the temperature of the fourth element portion 10D does not substantially change. For example, the fourth electrical resistance R4 of the fourth conductive member 14 is not substantially affected by the detection target.

For example, the third element portion 10C is a sensor element. The fourth element portion 10D is, for example, a reference element. By detecting the difference between the third electrical resistance R3 and the fourth electrical resistance R4, the state of the detection target can be detected with higher accuracy.

The fourth fixed portion 34 is shared by the first element portion 10A, the second element portion 10B, the third element portion 10C, and the fourth element portion 10D. This allows the size of the sensor 110 to be reduced.

As shown in FIG. 3B, a third gap g3 is provided between the base 50s and the third element portion 10C. As shown in FIG.3A, a fourth gap g4 is provided between the base 50s and the fourth element portion 10D. The third element portion 10C and the fourth element portion 10D have a MEMS structure.

The fourth element portion 10D may further include a fourth other conductive member 24. The fourth other conductive member 24 may not be supplied with current.

The third element portion 10C may further include a third insulating member 13i. At least a part of the third insulating member 13i is provided between the third conductive member 13 and the third other conductive member 23. The third element portion 10C is, for example, membrane-shaped. The fourth element portion 10D may further include a fourth insulating member 14i. At least a part of the fourth insulating member 14i is provided around the fourth conductive member 14. At least a part of the fourth insulating member 14i may be provided between the fourth conductive member 14 and the fourth other conductive member 24. The fourth element portion 10D is, for example, membrane-shaped.

The controller 70 is configured to supply the third current i3 to the third conductive member 13. The controller 70 is configured to supply the third other current iA3 to the third other conductive member 23. The controller 70 is configured to supply the fourth current i4 to the fourth conductive member 14.

At least one of the first conductive member 11, the first other conductive member 21, and the second conductive member 12 may include at least one selected from the group consisting of Ti, Al, TiN, Pt, and Au. At least one of the third conductive member 13, the third other conductive member 23, and the fourth conductive member 14 may include at least one selected from the group consisting of Ti, Al, TiN, Pt, and Au.

At least one of the first conductive member 11, the first other conductive member 21, and the second conductive member 12 may have a meander structure. At least one of the third conductive member 13, the third other conductive member 23, and the fourth conductive member 14 may have a meander structure. In FIG. 1, these conductive members are depicted in a simplified manner to make the figure easier to see.

In the embodiment, the detection target may be detected by a first detection result based on signals obtained from the first element portion 10A and the second element portion 10B. In the embodiment, the detection target may be detected by a second detection result based on signals obtained from the third element portion 10C and the fourth element portion 10D. The detection target may be detected based on the first detection result and the second detection result. In the embodiment, detection may be performed by applying a bridge circuit. A detection result of higher accuracy is obtained.

As shown in FIG. 4, for example, a voltage VB+ is applied to the second electrode 52. A voltage VB- is applied to the third electrode 53. In this example, the second electrode 52 is electrically connected to another part of the first conductive member 11 via the second connecting portion 32c. The part of the first conductive member 11 is electrically connected to a part of the second conductive member 12 via the first connecting portion 31c and the first other connecting portion 31Ac. The other part of the second conductive member 12 is electrically connected to the third electrode 53 via the third connecting portion 33c.

The first conductive member 11 and the second conductive member 12 are electrically connected in series. Voltages VB+ and VB- are applied to these conductive members. Currents based on these voltages flow through these conductive members. The first current i1 flows through the first conductive member 11. The second current i2 flows through the second conductive member 12. The first current i1 flowing through the first conductive member 11 flows through the second conductive member 12 as the second current i2. The second current i2 flowing through the second conductive member 12 flows through the first conductive member 11 as the first current i1. These currents correspond to currents for detecting the electrical resistance of these conductive members.

In this example, the second electrode 52 is electrically connected to a part of the fourth conductive member 14 via the second other connecting portion 32Ac. Another part of the fourth conductive member 14 is electrically connected to a part of the third conductive member 13 via the seventh connecting portion 37c and the seventh other connecting portion 37Ac. Another part of the third conductive member 13 is electrically connected to the third electrode 53 via the third other connecting portion 33Ac.

The fourth conductive member 14 and the third conductive member 13 are electrically connected in series. Voltages VB+ and VB- are applied to these conductive members. Currents based on these voltages flow through these conductive members. The third current i3 flows through the third conductive member 13. The fourth current i4 flows through the fourth conductive member 14. The third current i3 flowing through the third conductive member 13 flows through the fourth conductive member 14 as the fourth current i4. The fourth current i4 flowing through the fourth conductive member 14 flows through the third conductive member 13 as the third current i3. These currents correspond to the currents for detecting the electrical resistance of these conductive members.

A first circuit including a first conductive member 11 and a second conductive member 12 is electrically connected in parallel with a circuit including a third conductive member 13 and a fourth conductive member 14. This forms a bridge circuit.

The first electrode 51 is electrically connected to a part of the first conductive member 11 and a part of the second conductive member 12. An output Vout- of the bridge circuit is obtained from the first electrode 51. The fourth electrode 54 is electrically connected to a part of the third conductive member 13 and a part of the fourth conductive member 14. Another output Vout+ of the bridge circuit is obtained from the fourth electrode 54.

As shown in FIG. 5, the first other electrode 51A is electrically connected to a part of the first other conductive member 21. The second other electrode 52A is electrically connected to another part of the first other conductive member 21. The third other electrode 53A is electrically connected to a part of the third other conductive member 23. The fourth other electrode 54A is electrically connected to another part of the third other conductive member 23. A voltage H- is applied to the first other electrode 51A and the third other electrode 53A. A voltage H+ is applied to the second other electrode 52A and the fourth other electrode 54A. These voltages cause other currents to flow through these other conductive members.

The first other current iA1 is supplied to the first other conductive member 21. The first element portion 10A is heated. The third other current iA3 is supplied to the third other conductive member 23. The third element portion 10C is heated. These currents correspond to the power for heating.

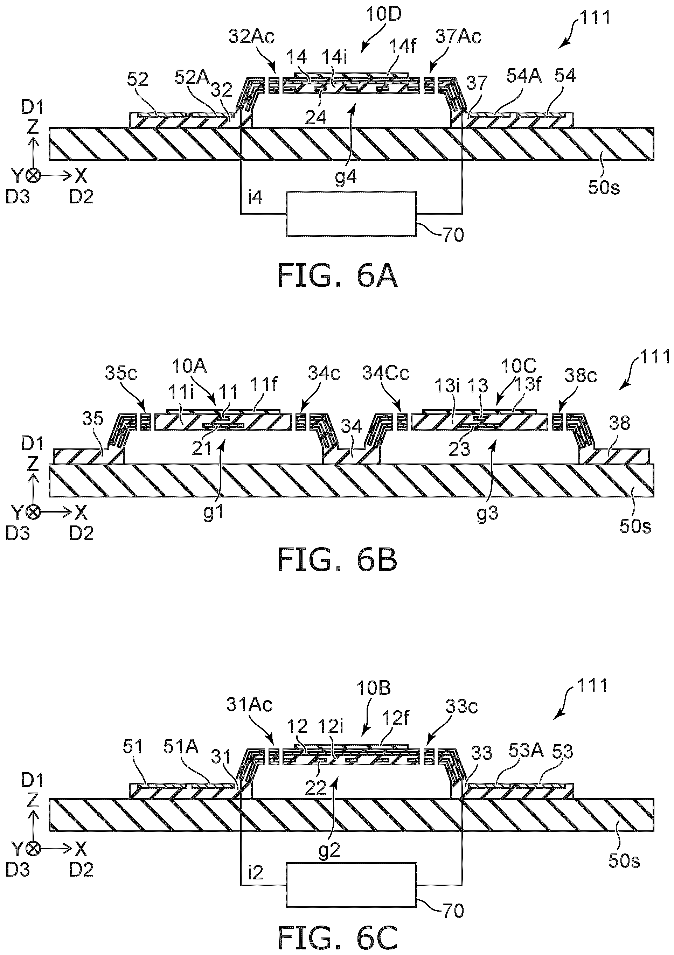

FIGS. 6A, 6B, and 6C are schematic cross-sectional views illustrating a sensor according to the first embodiment.

FIG. 6A is a cross-sectional view corresponding to the line Y1-Y2 in FIG. 1. FIG. B is a cross-sectional view corresponding to the line Y3-Y4 in FIG. 1. FIG. 6C is a cross-sectional view corresponding to the line Y5-Y6 in FIG. 1.

As shown in these figures, in a sensor 111 according to the embodiment, the first element portion 10A further includes a first film 11f. Except for this, the configuration of the sensor 111 may be the same as the configuration of the sensor 110.

In this example, the first conductive member 11 is provided between the base 50s and the first film 11f. The first film 11f includes, for example, at least one selected from the group consisting of Pt and Pd. These materials function, for example, as a catalyst. Higher sensitivity is obtained.

The second element portion 10B may further include a second film 12f. In this example, the second conductive member 12 is provided between the base 50s and the second film 12f. The second film 12f includes, for example, at least one selected from the group consisting of Pt and Pd.

The third element portion 10C may further include a third film 13f. For example, the third conductive member 13 is provided between the base 50s and the third film 13f. The third film 13f includes, for example, at least one selected from the group consisting of Pt and Pd.

The fourth element portion 10D may further include a fourth film 14f. For example, the fourth conductive member 14 is provided between the base 50s and the fourth film 14f. The fourth film 14f includes, for example, at least one selected from the group consisting of Pt and Pd. The sensor 111 is, for example, a catalytic combustion type sensor.

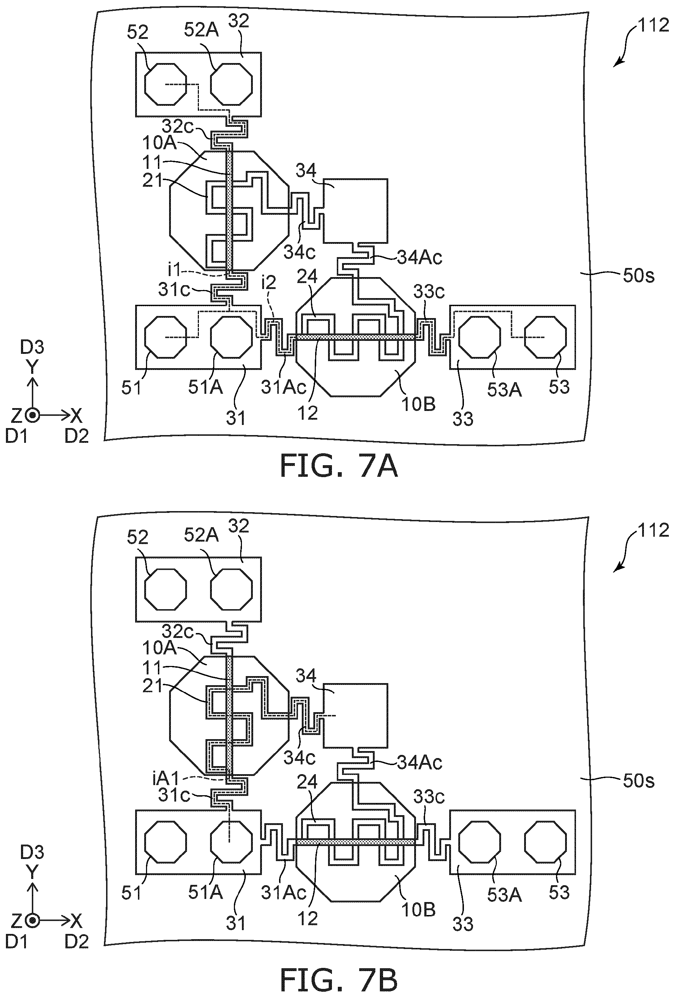

FIGS. 7A and 7B are schematic plan views illustrating a sensor according to the first embodiment.

As shown in these figures, in a sensor 112 according to the embodiment, the third element portion 10C and the fourth element portion 10D are omitted. The configuration of the sensor 112 except for this may be the same as the configuration of the sensor 110 or the sensor 111.

The sensor 112 includes the base 50s, the first fixed portion 31, the second fixed portion 32, the third fixed portion 33, the fourth fixed portion 34, the first element portion 10A, and the second element portion 10B. The first fixed portion 31, the second fixed portion 32, the third fixed portion 33, and the fourth fixed portion 34 are fixed to the base 50s. The first element portion 10A includes the first conductive member 11 and the first other conductive member 21. The second element portion 10B includes the second conductive member 12. The second element portion 10B may further include the second other conductive member 22.

The sensor 112 further includes the first connecting portion 31c, the second connecting portion 32c, the first other connecting portion 31Ac, the third connecting portion 33c, the fourth connecting portion 34c, and the fourth other connecting portion 34Ac. The first connecting portion 31c is supported by the first fixed portion 31 and supports the first element portion 10A. The second connecting portion 32c is supported by the second fixed portion 32 and supports the first element portion 10A. The first other connecting portion 31Ac is supported by the first fixed portion 31 and supports the second element portion 10B. The third connecting portion 33c is supported by the third fixed portion 33 and supports the second element portion 10B. The fourth connecting portion 34c is supported by the fourth fixed portion 34 and supports the first element portion 10A. The fourth other connecting portion 34Ac is supported by the fourth fixed portion 34 and supports the second element portion 10B.

As shown in FIG. 7A, the first connecting portion 31c and the second connecting portion 32c are configured to pass the first current i1 flowing through the first conductive member 11. As shown in FIG. 7B, the first connecting portion 31c is configured to pass the first other current iA1 flowing through the first other conductive member 21. As shown in FIG. 7A, the first other connecting portion 31Ac is configured to pass the second current i2 flowing through the second conductive member 12. As shown in FIG. 7B, the fourth connecting portion 34c is configured to pass the first other current iA1.

For example, the first other current iA1 increases the temperature of the first conductive member 11 (first element portion 10A). For example, the first electrical resistance R1 of the first conductive member 11 is detected by the first current i1. For example, the second electrical resistance R2 of the second conductive member 12 is detected by the second current i2. The detection target can be detected by detecting the difference between these electrical resistances.

In the sensor 112, the first element portion 10A is supported by three connections that serve as current paths. Stable supporting is possible. The first connecting portion 31c serves as a current path through which the first current i1 and the first other current iA1 pass. By the current path being shared, a small footprint is obtained.

The second element portion 10B is supported by the fourth other connecting portion 34Ac in addition to the two connecting portions (the first other connecting portion 31Ac and the third connecting portion 33c) that form the current path. Stable supporting is possible.

In the sensor 112, the second element portion 10B may further include the second other conductive member 22. The second other conductive member 22 may not be supplied with a current.

In the sensor 112, the third direction D3 from the first fixed portion 31 to the second fixed portion 32 crosses the second direction D2 from the first fixed portion 31 to the third fixed portion 33. In this example, the direction from the first element portion 10A to the fourth fixed portion 34 is along the second direction D2. The direction from the second element portion 10B to the fourth fixed portion 34 is along the third direction D3.

The direction from the first fixed portion 31 to the second fixed portion 32 may be inclined with respect to the direction from the first fixed portion 31 to the third fixed portion 33. For example, in the direction from the third fixed portion 33 to the second fixed portion 32, at least a part of the first element portion 10A may be provided between the third fixed portion 33 and the second fixed portion 32. For example, in the direction from the third fixed portion 33 to the second fixed portion 32, at least a part of the second element portion 10B may be provided between the third fixed portion 33 and the second fixed portion 32.

### (Second Embodiment)

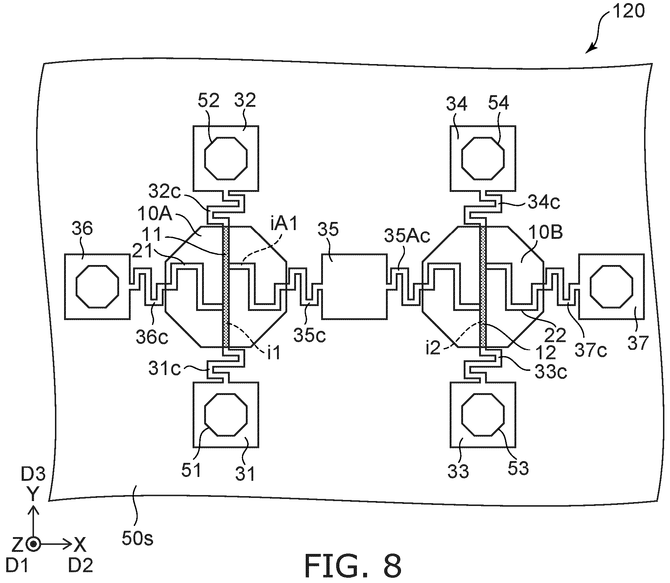

FIG. 8 is a schematic plan view illustrating a sensor according to a second embodiment.

As shown in FIG. 8, a sensor 120 according to the embodiment includes the base 50s, the first fixed portion 31, the second fixed portion 32, the third fixed portion 33, the fourth fixed portion 34, the fifth fixed portion 35, the sixth fixed portion 36, and the seventh fixed portion 37. The first fixed portion 31, the second fixed portion 32, the third fixed portion 33, the fourth fixed portion 34, the fifth fixed portion 35, the sixth fixed portion 36, and the seventh fixed portion 37 are fixed to the base 50s. The sensor 120 includes the first element portion 10A and the second element portion 10B. The first element portion 10A includes the first conductive member 11 and the first other conductive member 21. The second element portion 10B includes the second conductive member 12.

The sensor 120 includes the first connecting portion 31c, the second connecting portion 32c, the third connecting portion 33c, the fourth connecting portion 34c, the fifth connecting portion 35c, the sixth connecting portion 36c, the seventh connecting portion 37c, and the fifth other connecting portion 35Ac. The first connecting portion 31c is supported by the first fixed portion 31 and supports the first element portion 10A. The second connecting portion 32c is supported by the second fixed portion 32 and supports the first element portion 10A. The third connecting portion 33c is supported by the third fixed portion 33 and supports the second element portion 10B. The fourth connecting portion 34c is supported by the fourth fixed portion 34 and supports the second element portion 10B. The fifth connecting portion 35c is supported by the fifth fixed portion 35 and supports the first element portion 10A. The sixth connecting portion 36c is supported by the sixth fixed portion 36 and supports the first element portion 10A. The seventh connecting portion 37c is supported by the seventh fixed portion 37 and supports the second element portion 10B. The fifth other connecting portion 35Ac is supported by the fifth fixed portion 35 and supports the second element portion 10B.

In the sensor 120, the first current i1 flowing through the first conductive member 11 passes through the first connecting portion 31c and the second connecting portion 32c. The first other current iA1 flowing through the first other conductive member 21 passes through the fifth connecting portion 35c and the sixth connecting portion 36c. The second current i2 flowing through the second conductive member 12 passes through the third connecting portion 33c and the fourth connecting portion 34c.

For example, the first electrode 51 is electrically connected to a part of the first conductive member 11 via the first connecting portion 31c. The second electrode 52 is electrically connected to another part of the first conductive member 11 via the second connecting portion 32c. For example, the third electrode 53 is electrically connected to a part of the second conductive member 12 via the third connecting portion 33c. The fourth electrode 54 is electrically connected to another part of the second conductive member 12 via the fourth connecting portion 34c.

The second element portion 10B may further include the second other conductive member 22. The second other conductive member 22 may not be supplied with a current.

The fifth fixed portion 35 is between the sixth fixed portion 36 and the seventh fixed portion 37 in the second direction D2 crossing the first direction D1 (see FIG. 2A) from the base 50s to the first fixed portion 31. The first element portion 10A is between the sixth fixed portion 36 and the fifth fixed portion 35 in the second direction D2. The second element portion 10B is between the fifth fixed portion 35 and the seventh fixed portion 37 in the second direction D2.

The first element portion 10A is between the first fixed portion 31 and the second fixed portion 32 in the third direction D3 crossing the first direction D1 and the second direction D2. The second element portion 10B is between the third fixed portion 33 and the fourth fixed portion 34 in the third direction D3.

In the sensor 120, the fifth fixed portion 35 is shared by the first element portion 10A and the second element portion 10B. Stable supporting is obtained. The size of the sensor 120 can be reduced. For example, a small "footprint" can be obtained.

The first gap g1 is provided between the base 50s and the first element portion 10A (see FIG. 2A). The second gap g2 is provided between the base 50s and the second element portion 10B (see FIG. 3C).

In the sensor 120, the conductive member (wiring) electrically connected to the first conductive member 11 may pass through the sixth connecting portion 36c and the fifth connecting portion 35c. In this case, the conductive member (wiring) electrically connected to the first other conductive member 21 may pass through the first connecting portion 31c and the second connecting portion 32c. The conductive member (wiring) electrically connected to the second conductive member 12 may pass through the fifth other connecting portion 35Ac and the seventh connecting portion 37c.

### (Third Embodiment)

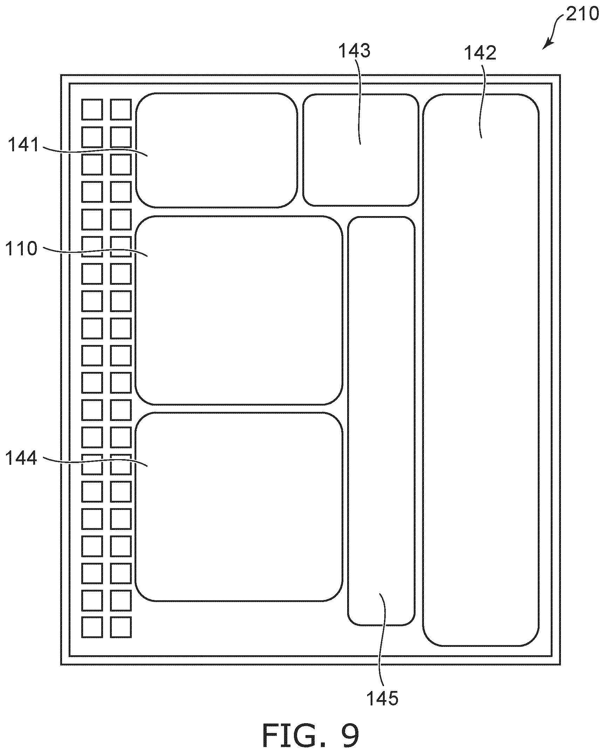

FIG. 9 is a schematic plan view illustrating a sensor according to a third embodiment.

As shown in FIG. 9, a sensor 210 according to the embodiment includes a sensor according to the first or second embodiment (e.g., sensor 110) and other sensors. The other sensors include at least one of a capacitive gas sensor 141 (e.g., a capacitive hydrogen sensor), a capacitive humidity sensor 142, a temperature sensor 143, a gas flow sensor 144, and a catalytic combustion sensor 145. The sensor according to the first embodiment (e.g., sensor 110) includes, for example, a thermal conduction type gas sensor. The sensor 210 is, for example, a sensor system.

In the sensor 210, various types of sensors are provided. A highly accurate and convenient sensor can be provided. In the embodiment, the detection results of one sensor of a different type may be used to correct the detection results of two other sensors.

The embodiment may include the following Technical proposals:

### (Technical proposal 1)

A sensor, comprising:
a base;
a first fixed portion fixed to the base;
a second fixed portion fixed to the base;
a third fixed portion fixed to the base;
a fourth fixed portion fixed to the base;
a first element portion including a first conductive member and a first other conductive member;
a second element portion including a second conductive member,
a first connecting portion supported by the first fixed portion and supporting the first element portion;
a second connecting portion supported by the second fixed portion and supporting the first element portion;
a first other connecting portion supported by the first fixed portion and supporting the second element portion;
a third connecting portion supported by the third fixed portion and supporting the second element portion;
a fourth connecting portion supported by the fourth fixed portion and supporting the first element portion; and
a fourth other connecting portion supported by the fourth fixed portion and supporting the second element portion,
the first connecting portion and the second connecting portion being configured to pass a first current flowing through the first conductive member,
the first connecting portion being configured to pass a first other current flowing through the first other conductive member, and
the first other connecting portion being configured to pass a second current flowing through the second conductive member.

### (Technical proposal 2)

The sensor according to Technical proposal 1, wherein
the second connecting portion is configured to pass the first other current, and
the third connecting portion is configured to pass the second current.

### (Technical proposal 3)

The sensor according to Technical proposal 1 or 2, wherein
a second direction from the first fixed portion to the third fixed portion crosses a first direction from the base to the first fixed portion, and
a third direction from the first fixed portion to the second fixed portion crosses a plane including the first direction and the second direction.

### (Technical proposal 4)

The sensor according to Technical proposal 3, wherein
the first current, the first other current, and the second current do not pass through the fourth connecting portion and the fourth other connecting portion.

### (Technical proposal 5)

The sensor according to Technical proposal 3, further comprising:
a fifth fixed portion fixed to the base;
a sixth fixed portion fixed to the base;
a fifth connecting portion supported by the fifth fixed portion and supporting the first element portion; and
a sixth connecting portion supported by the sixth fixed portion and supporting the second element portion,
a direction from the fifth fixed portion to the fourth fixed portion being along the second direction, and
a direction from the sixth fixed portion to the fourth fixed portion being along the third direction.

### (Technical proposal 6)

The sensor according to Technical proposal 5, wherein
the first current, the first other current, and the second current do not pass through the fourth connecting portion, the fourth other connecting portion, the fifth connecting portion, and the sixth connecting portion.

### (Technical proposal 7)

The sensor according to any one of Technical proposals 3-6, wherein
a first gap is provided between the base and the first element portion, and
a second gap is provided between the base and the second element portion.

### (Technical proposal 8)

The sensor according to any one of Technical proposals 3-7, wherein
a state of a detection target around the first element portion and the second element portion is detected based on a value corresponding to a difference between a first electrical resistance of the first conductive member and a second electrical resistance of the second conductive member when the first other current flows through the first other conductive member.

### (Technical proposal 9)

The sensor according to any one of Technical proposals 3-8, further comprising:
a first electrode; a first other electrode; a second electrode; a second other electrode; and a third electrode,
the first electrode is connected to a part of the first conductive member via the first connecting portion,
the first other electrode is connected to a part of the first other conductive member via the first connecting portion,
the second electrode is connected to another part of the first conductive member via the second connecting portion ,
the second other electrode is connected to another part of the first other conductive member via the second connecting portion,
the third electrode is connected to a part of the second conductive member via the third connecting portion, and
the first electrode is connected to another part of the second conductive member via the first other connecting portion.

### (Technical proposal 10)

The sensor according to any one of Technical proposal 5 or 6, further comprising:
a seventh fixed portion fixed to the base;
a third element portion including a third conductive member and a third other conductive member;
a fourth element portion including a fourth conductive member,
a third other connecting portion supported by the third fixed portion and supporting the third element portion;
a seventh connecting portion supported by the seventh fixed portion and supporting the third element portion;
a fourth opposing connecting portion supported by the fourth fixed portion and supporting the third element portion;
a second other connecting portion supported by the second fixed portion and supporting the fourth element portion;
a seventh other connecting portion supported by the seventh fixed portion and supporting the fourth element portion; and
a fourth opposing other connecting portion supported by the fourth fixed portion and supporting the fourth element portion.

### (Technical proposal 11)

The sensor according to Technical proposal 10, wherein
the third other connecting portion and the seventh connecting portion are configured to pass a third current flowing through the third conductive member,

The third other connecting portion and the seventh connecting portion are configured to pass a third other current flowing through the third conductive member, and
the second other connecting portion and the seventh other connecting portion are configured to pass a fourth current flowing through the fourth conductive member.

### (Technical proposal 12)

The sensor according to Technical proposal 11, further comprising:
an eighth fixed portion fixed to the base;
a ninth fixed portion fixed to the base;
an eighth connecting portion supported by the eighth fixed portion and supporting the third element portion; and
a ninth connecting portion supported by the ninth fixed portion and supporting the fourth element portion.

### (Technical proposal 13)

The sensor according to Technical proposal 12, wherein
in the second direction, the fourth fixed portion is provided between the fifth fixed portion and the eighth fixed portion,
in the second direction, the first element portion is provided between the fifth fixed portion and the fourth fixed portion,
in the second direction, the third element portion is provided between the fourth fixed portion and the eighth fixed portion,
in the second direction, the second element portion is provided between the first fixed portion and the third fixed portion,
in the second direction, the fourth element portion is provided between the second fixed portion and the seventh fixed portion,
in the third direction, the fourth fixed portion is provided between the sixth fixed portion and the ninth fixed portion,
in the third direction, the second element portion is provided between the sixth fixed portion and the fourth fixed portion,
in the third direction, the fourth element portion is provided between the fourth fixed portion and the ninth fixed portion,
in the third direction, the first element portion is provided between the first fixed portion and the second fixed portion, and
in the third direction, the third element portion is provided between the third fixed portion and the seventh fixed portion.

### (Technical proposal 14)

The sensor according to any one of Technical proposals 10-13, further comprising:
a third electrode; a third other electrode; a fourth electrode; and a fourth other electrode;
the third electrode being connected to a part of the third conductive member via the third other connecting portion,
the third electrode being connected to a part of the third conductive member via the third other connecting portion,
the fourth electrode being connected to another part of the third conductive member via the seventh connecting portion, and
the fourth electrode is connected to another part of the third conductive member via the seventh connecting portion.

### (Technical proposal 15)

The sensor according to any one of Technical proposals 1-14, wherein
the second element portion further includes a second other conductive member, and
no current is supplied to the second other conductive member.

### (Technical proposal 16)

The sensor according to any one of Technical proposals 1-15, wherein
the first element portion further includes a first insulating member,
at least a part of the first insulating member is provided between the first conductive member and the first other conductive member,
the second element portion further includes a second insulating member, and
at least a part of the second insulating member is provided around the second conductive member.

### (Technical proposal 17)

The sensor according to any one of Technical proposals 1-16, wherein
at least one of the first conductive member, the first other conductive member, or the second conductive member includes at least one selected from the group consisting of Ti, Al, TiN, Pt, and Au.

### (Technical proposal 18)

The sensor according to any one of Technical proposals 1-17, wherein
at least one of the first conductive member, the first other conductive member, or the second conductive member has a meander structure.

### (Technical proposal 19)

The sensor according to Technical proposal 1, wherein
the fourth connecting portion is configured to pass the first other current.

### (Technical proposal 20)

A sensor, comprising:
a base;
a first fixed portion fixed to the base;
a second fixed portion fixed to the base;
a third fixed portion fixed to the base;
a fourth fixed portion fixed to the base;
a fifth fixed portion fixed to the base;
a sixth fixed portion fixed to the base;
a seventh fixed portion fixed to the base;
a first element portion including a first conductive member and a first other conductive member;
a second element portion including a second conductive member;
a first connecting portion supported by the first fixed portion and supporting the first element portion;
a second connecting portion supported by the second fixed portion and supporting the first element portion;
a third connecting portion supported by the third fixed portion and supporting the second element portion;
a fourth connecting portion supported by the fourth fixed portion and supporting the second element portion;
a fifth connecting portion supported by the fifth fixed portion and supporting the first element portion;
a sixth connecting portion supported by the sixth fixed portion and supporting the first element portion;
a fifth other connecting portion supported by the fifth fixed portion and supporting the second element portion; and
a seventh connecting portion supported by the seventh fixed portion and supporting the second element portion,
the first connecting portion and the second connecting portion being configured to pass a first current flowing through the first conductive member,
the fifth connecting portion and the sixth connecting portion being configured to pass a first other current flowing through the first other conductive member,
the third connecting portion and the fourth connecting portion being configured to pass a second current flowing through the second conductive member,
the fifth fixed portion being between the sixth fixed portion and the seventh fixed portion in a second direction crossing a first direction from the base to the first fixed portion,
the first element portion being between the sixth fixed portion and the fifth fixed portion in the second direction,
the second element portion being between the fifth fixed portion and the seventh fixed portion in the second direction,
the first element portion being between the first fixed portion and the second fixed portion in a third direction crossing the first direction and the second direction, and
the second element portion being between the third fixed portion and the fourth fixed portion in the third direction.

According to the embodiment, a sensor can be provided that allows for improved characteristics.

In the specification, "electrically connected" includes a state in which plurality of conductors are physically in contact with each other and current flows between these plurality of conductors. "Electrically connected" includes a state in which a conductor is inserted between plurality of conductors and current flows between these plurality of conductors.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in sensors such as bases, element portions, controllers, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all sensors practicable by an appropriate design modification by one skilled in the art based on the sensors described above as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A sensor, comprising:
a base;
a first fixed portion fixed to the base;
a second fixed portion fixed to the base;
a third fixed portion fixed to the base;
a fourth fixed portion fixed to the base;
a first element portion including a first conductive member and a first other conductive member;
a second element portion including a second conductive member,
a first connecting portion supported by the first fixed portion and supporting the first element portion;
a second connecting portion supported by the second fixed portion and supporting the first element portion;
a first other connecting portion supported by the first fixed portion and supporting the second element portion;
a third connecting portion supported by the third fixed portion and supporting the second element portion;
a fourth connecting portion supported by the fourth fixed portion and supporting the first element portion; and
a fourth other connecting portion supported by the fourth fixed portion and supporting the second element portion,
the first connecting portion and the second connecting portion being configured to pass a first current flowing through the first conductive member,
the first connecting portion being configured to pass a first other current flowing through the first other conductive member, and
the first other connecting portion being configured to pass a second current flowing through the second conductive member.

2. The sensor according to claim 1, wherein
the second connecting portion is configured to pass the first other current, and
the third connecting portion is configured to pass the second current.

3. The sensor according to claim 1 or 2, wherein
a second direction from the first fixed portion to the third fixed portion crosses a first direction from the base to the first fixed portion, and
a third direction from the first fixed portion to the second fixed portion crosses a plane including the first direction and the second direction.

4. The sensor according to claim 3, wherein
the first current, the first other current, and the second current do not pass through the fourth connecting portion and the fourth other connecting portion.

5. The sensor according to claim 3, further comprising:
a fifth fixed portion fixed to the base;
a sixth fixed portion fixed to the base;
a fifth connecting portion supported by the fifth fixed portion and supporting the first element portion; and
a sixth connecting portion supported by the sixth fixed portion and supporting the second element portion,
a direction from the fifth fixed portion to the fourth fixed portion being along the second direction, and
a direction from the sixth fixed portion to the fourth fixed portion being along the third direction.

6. The sensor according to claim 5, wherein
the first current, the first other current, and the second current do not pass through the fourth connecting portion, the fourth other connecting portion, the fifth connecting portion, and the sixth connecting portion.

7. The sensor according to any one of claims 3-6, wherein
a first gap is provided between the base and the first element portion, and
a second gap is provided between the base and the second element portion.

8. The sensor according to any one of claims 3-7, wherein
a state of a detection target around the first element portion and the second element portion is detected based on a value corresponding to a difference between a first electrical resistance of the first conductive member and a second electrical resistance of the second conductive member when the first other current flows through the first other conductive member.

9. The sensor according to any one of claims 3-8, further comprising:
a first electrode; a first other electrode; a second electrode; a second other electrode; and a third electrode,
the first electrode is connected to a part of the first conductive member via the first connecting portion,
the first other electrode is connected to a part of the first other conductive member via the first connecting portion,
the second electrode is connected to another part of the first conductive member via the second connecting portion ,
the second other electrode is connected to another part of the first other conductive member via the second connecting portion,
the third electrode is connected to a part of the second conductive member via the third connecting portion, and
the first electrode is connected to another part of the second conductive member via the first other connecting portion.

10. The sensor according to claim 5 or 6, further comprising:
a seventh fixed portion fixed to the base;
a third element portion including a third conductive member and a third other conductive member;
a fourth element portion including a fourth conductive member,
a third other connecting portion supported by the third fixed portion and supporting the third element portion;
a seventh connecting portion supported by the seventh fixed portion and supporting the third element portion;
a fourth opposing connecting portion supported by the fourth fixed portion and supporting the third element portion;
a second other connecting portion supported by the second fixed portion and supporting the fourth element portion;
a seventh other connecting portion supported by the seventh fixed portion and supporting the fourth element portion; and
a fourth opposing other connecting portion supported by the fourth fixed portion and supporting the fourth element portion.

11. The sensor according to claim 10, wherein
the third other connecting portion and the seventh connecting portion are configured to pass a third current flowing through the third conductive member,
The third other connecting portion and the seventh connecting portion are configured to pass a third other current flowing through the third conductive member, and
the second other connecting portion and the seventh other connecting portion are configured to pass a fourth current flowing through the fourth conductive member.

12. The sensor according to claim 11, further comprising:
an eighth fixed portion fixed to the base;
a ninth fixed portion fixed to the base;
an eighth connecting portion supported by the eighth fixed portion and supporting the third element portion; and
a ninth connecting portion supported by the ninth fixed portion and supporting the fourth element portion.

13. The sensor according to claim 12, wherein
in the second direction, the fourth fixed portion is provided between the fifth fixed portion and the eighth fixed portion,
in the second direction, the first element portion is provided between the fifth fixed portion and the fourth fixed portion,
in the second direction, the third element portion is provided between the fourth fixed portion and the eighth fixed portion,
in the second direction, the second element portion is provided between the first fixed portion and the third fixed portion,
in the second direction, the fourth element portion is provided between the second fixed portion and the seventh fixed portion,
in the third direction, the fourth fixed portion is provided between the sixth fixed portion and the ninth fixed portion,
in the third direction, the second element portion is provided between the sixth fixed portion and the fourth fixed portion,
in the third direction, the fourth element portion is provided between the fourth fixed portion and the ninth fixed portion,
in the third direction, the first element portion is provided between the first fixed portion and the second fixed portion, and
in the third direction, the third element portion is provided between the third fixed portion and the seventh fixed portion.

14. The sensor according to any one of claims 10-13, further comprising:
a third electrode; a third other electrode; a fourth electrode; and a fourth other electrode;
the third electrode being connected to a part of the third conductive member via the third other connecting portion,
the third electrode being connected to a part of the third conductive member via the third other connecting portion,
the fourth electrode being connected to another part of the third conductive member via the seventh connecting portion, and
the fourth electrode is connected to another part of the third conductive member via the seventh connecting portion.

15. The sensor according to any one of claims 1-14, wherein
the second element portion further includes a second other conductive member, and
no current is supplied to the second other conductive member.
